**Europäisches Patentamt**

**European Patent Office**

**Office européen des brevets**

(11) Veröffentlichungsnummer: **0 024 622**
**B1**

(12) **EUROPÄISCHE PATENTSCHRIFT**

(45) Veröffentlichungstag der Patentschrift:
**14.03.84**

(21) Anmeldenummer: **80104745.7**

(22) Anmeldetag: **12.08.80**

(51) Int. Cl.³: **A 01 G 25/02**, B 29 D 23/18,
**B 29 C 17/07**

(54) Verfahren und Vorrichtung zur Herstellung eines flachen Hohlkörpers.

(30) Priorität: **17.08.79 DE 2933304**

(43) Veröffentlichungstag der Anmeldung:
**11.03.81 Patentblatt 81/10**

(45) Bekanntmachung des Hinweises auf die Patenterteilung:
**14.03.84 Patentblatt 84/11**

(84) Benannte Vertragsstaaten:
**AT BE CH DE FR GB IT LI NL SE**

(56) Entgegenhaltungen:
**DE - A - 2 061 027**
**DE - A - 2 553 574**
**FR - A - 2 356 986**
**US - A - 3 951 345**

(73) Patentinhaber: **Hegler, Wilhelm, Goethestrasse 2,**
**D-8730 Bad Kissingen (DE)**

(72) Erfinder: **Hegler, Wilhelm, Goethestrasse 2, D-8730 Bad**
**Kissingen (DE)**
Erfinder: **Hegler, Ralph-Peter, Goethestrasse 2,**
**D-8730 Bad Kissingen (DE)**

(74) Vertreter: **Rau, Manfred, Dr. Dipl.-Ing. et al,**
**Postfach 91 04 80 Lange Zeile 30,**
**D-8500 Nürnberg 91 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren und Vorrichtung zur Herstellung eines flachen Hohlkörpers

Die Erfindung richtet sich auf ein Verfahren nach dem Oberbegriff von Patentanspruch 1 und eine Vorrichtung nach dem Oberbegriff von Patentanspruch 9.

Die Herstellung flacher Hohlkörper mittels eines Vakuumverfahrens ist an sich aus der DE-A-2 061 027 bekannt. Bei diesem vorbekannten Verfahren und der entsprechenden Vorrichtung wird aber noch nicht das Problem gelöst, daß bei der Herstellung von derartigen flachen Hohlkörpern mit durch Verschweißen hergestellten inneren Zwischenwänden eine ganz erhebliche Gefahr besteht, daß die sich in geringem Abstand gegenüberstehenden Seitenwände in undefinierter Weise aneinander ankleben.

Aus der DE-OS 2 553 574 ist ein Verfahren zur Herstellung von Wärmeaustauschern bekannt, bei welchem aber die Anlage des warmplastischen Materials an den Formhälften nicht durch ein außen angelegtes Vakuum hervorgerufen wird, sondern durch mit verhältnismäßig hohem Druck eingeblasene Luft.

Der Erfindung liegt die Aufgabe zugrunde, ein Verfahren und eine Vorrichtung der im Oberbegriff von Patentanspruch 1 bzw. 9 genannten Art so auszugestalten, daß auch bei der Herstellung feinstrukturierter innerer Zwischenwände sichergestellt ist, daß ein Verkleben der Seitenwände vermieden wird, wobei die Produktion kontinuierlich und dementsprechend mit hoher Geschwindigkeit bei einer besonders guten Qualität des herzustellenden Produkts möglich sein soll.

Diese Aufgabe wird gelöst durch ein Verfahren nach dem kennzeichnenden Teil von Anspruch 1. Wesentlich an dem Verfahren nach dem Anspruch 1 unter Verwendung der im Oberbegriff des Anspruchs 1 angegebenen Form ist, daß der noch warmplastische Schlauch vor dem vollständigen Schließen der Form bereits durch Vakuum-Beaufschlagung von außen vorverformt wird. Diese Maßnahme ist deshalb besonders wesentlich, weil z. B. ein als herzustellender Flachkörper in Betracht kommender Bewässerungsschlauch im Bereich von dessen Tropfabschnitten mit einer Vielzahl von Schweißstellen versehen ist. Bei einem Zusammendrücken im Bereich dieser Schweißstellen würde der Schlauch über die volle Länge und Breite des Tropfabschnittes zusammenkleben, wenn er nicht durch Vorab-Beaufschlagung mit Vakuum vorgeformt und aus dieser vorgeformten Stellung dann zusammengedrückt würde. Aus den vorgenannten Gründen erfolgt die Vorformung im einzelnen dann in der im Patentanspruch 2 angegebenen Art. Um ein Einquetschen des den Schlauchabschnitt bildenden Bereichs des noch warmplastischen Schlauches beim Schließen der Form zu verhindern, sind die Maßnahmen nach dem Anspruch 3 vorgesehen.

Die Ansprüche 4 und 5 geben wieder, in wie kurzen Zeitfolgen die Vorab-Beaufschlagung des den Tropfabschnitt bildenden Bereichs des noch warmplastischen Schlauchs einerseits und des den Schlauchabschnitt bildenden Bereichs des noch warmplastischen Schlauchs andererseits erfolgt. Durch die Maßnahmen nach den Ansprüchen 6 und 7 wird insbesondere die bereits geschilderte Vorformung des noch warmplastischen Schlauches gefördert.

Um sicherzustellen, daß ein einwandfreier Einlauf des noch warmplastischen Schlauches in die Form erreicht wird, sind die Maßnahmen nach dem Anspruch 8 vorgesehen.

Bei der Vorrichtung nach dem Oberbegriff des Patentanspruches 9 wird durch dessen kennzeichnende Merkmale in konstruktiv einfacher Weise erreicht, daß nur ein vorgegebener Bereich, nämlich der etwa für die Bildung des Tropfabschnitts vorgesehene Bereich des noch warmplastischen Schlauches durch Vorab-Beaufschlagung mit Vakuum vorgeformt wird.

Durch die Maßnahmen nach dem Patentanspruch 10 wird dann sichergestellt, daß zeitlich nachfolgend auch die anderen Bereiche der Formausnehmung, in denen der Schlauchabschnitt ausgeformt werden soll, mit Vakuum beaufschlagt werden.

Anspruch 11 gibt eine einfache Ausgestaltung der zugeordneten Vakuum-Kanäle wieder.

Mit der erfindungsgemäßen Vorrichtung können z. B. bei der Herstellung eines Bewässerungsschlauchs Produktionsgeschwindigkeiten bis zu 30 m/min erreicht werden.

Weitere Vorteile und Merkmale der Erfindung ergeben sich aus der nachfolgenden Beschreibung anhand der Zeichnung. In der Zeichnung zeigt

Fig. 1 einen Teilausschnitt aus einer Vorrichtung zur Herstellung des Bewässerungsschlauches entsprechend der Schnittlinie XV-XV in Fig. 3,

Fig. 2 bis 5 vier Vertikalschnitte durch die Vorrichtung nach Fig. 1 entsprechend den Schnittlinien XVI-XVI bis XIX-XIX.

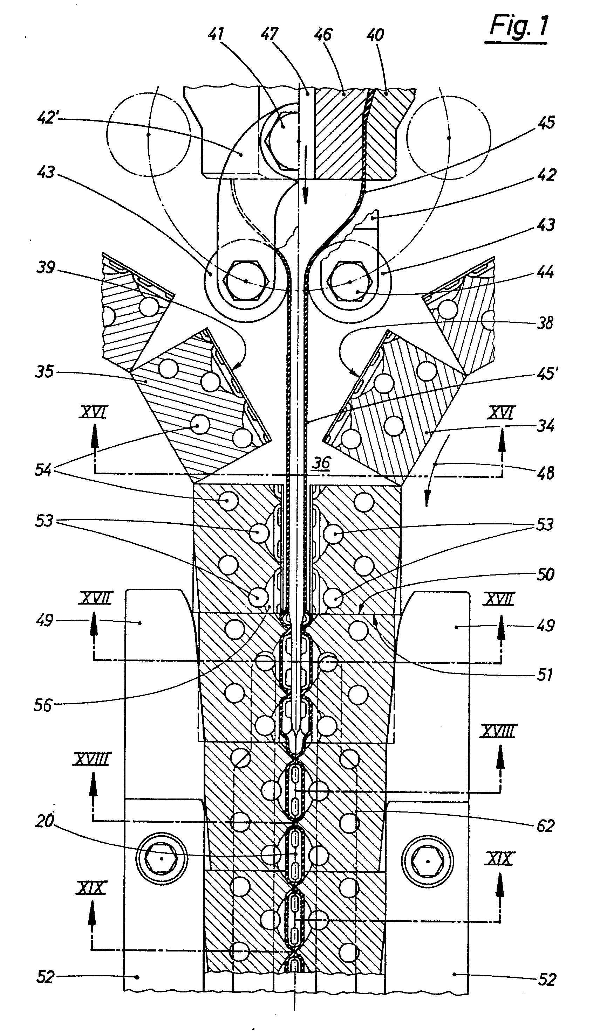

Die in den Figuren 1 bis 5 nur in Teilausschnitt dargestellte Vorrichtung, welche im folgenden im Zusammenhang mit der Herstellung eines Bewässerungsschlauches beschrieben wird, kann in ihrem grundsätzlichen Gesamtaufbau der Vorrichtung entsprechen, wie sie in der DE-AS 20 61 027.9-16 dargestellt und beschrieben ist. Sie weist demzufolge eine Vielzahl von endlos geführten Formabschnittshälften 34, 35 auf, die sich auf einer Formstrecke 36 jeweils zu einer Hohlform ergänzen bzw. zusammenfügen. Die einander jeweils paarweise zugeordneten Formabschnittshälften 34, 35 haben einen etwa quaderförmigen Querschnitt und werden über einen ebenen Maschinentisch 37 geführt. Sie weisen jeweils an ihren einander benachbarten, also bei geschlossener Form aneinanderliegenden Seiten 38, 39 eine Ausgestaltung auf, die der einen Hälfte des Außenprofils des zu erzeugenden Bewässerungsschlauches entspricht. Die endlos umlaufend angetriebenen Formabschnittshälften 34, 35 schwenken am Beginn der Formstrekke 36 in diese ein. Diesem Beginn der Formstrekke ist eine Spritzdüse 40 einer im einzelnen nicht dargestellten Kunststoff-Spritzmaschine vorgeordnet, aus der ein zylindrischer Schlauch ausgespritzt wird. An dieser Spritzdüse sind zwei um vertikale Lagerbolzen 41 schwenk- und verstellbare Schwenkarme 42, 42' gelagert, die an ihren freien, der Formstrecke zugewandten Enden jeweils eine Walze 43 tragen, die ebenfalls um eine vertikale Achse 44 frei drehbar sind. Mittels dieser Walzen 43 wird der in noch plastischem Zustand mit Kreisquerschnitt aus der Spritzdüse 40 austretende Schlauch 45 flachgedrückt. Außerdem erfolgt mittels dieser Walzen eine Justierung der Wandstärke des Schlauches 45 durch entsprechende Beeinflussung der Ausflußrichtung. Beim Anfahren der Vorrichtung sind daher die Schwenkarme 42, 42' mit den Walzen 43 in der in Fig. 1 strichpunktiert dargestellten hinteren Lage. Erst wenn der dann durchgehend mit Kreisquerschnitt bis zur Formstrecke verlaufende Schlauch von den Formabschnittshälften 34, 35 in irgendeiner Form erfaßt ist und durch die Formstrecke geführt wird, werden die Schwenkarme 42, 42' unter entsprechender Verformung und Justierung des Schlauches 45 nach innen geschwenkt und in der endgültigen Stellung durch Fixierung der Lagerbolzen 41 festgestellt. Die Breite des flachgedrückten Schlauches 45' ist geringer als die Breite des später zu erzeugenden Bewässerungsschlauches 1. Im Spritzdorn 46 der Spritzdüse 40 ist ein Stützluft-Kanal 47 ausgebildet, durch den Stützluft mit einem Druck von nur wenigen hundertstel bar, beispielsweise 0,01 bis 0,05 bar, in den Schlauch 45 bzw. 45' eingeblasen werden kann, wodurch auch das Profil des bereits flachgedrückten Schlauches 45' beeinflußt und korrigiert werden kann.

Die Formabschnittshälften 34, 35 werden in ihrer Bewegungsrichtung 48 beim Einlauf in die Formstrecke 35 zuerst in eine zueinander parallele Stellung gebracht, in der die einander zugeordneten Seiten 38, 39 noch einen Abstand voneinander haben, der größer ist als die Breite des bereits flachgedrückten Schlauches 45'. In dieser Stellung kommen die beiden entsprechenden Formabschnittshälften 34, 35 in Eingriff mit jeweils einer Parallel-Zuführungsleiste 49, durch die sie beim Weiterlauf in der Formstrecke parallel aufeinander zu geschoben werden. Wie der Fig. 1 zu entnehmen ist, liegen die Stirnseiten 50, 51 der in Bewegungsrichtung 48 hintereinander laufenden Formabschnittshälften 34, 34 einerseits und 35, 35 andererseits hierbei völlig flächig aneinander an. Beim Weiterführen über die Parallel-Führungsleisten 49 werden die einander paarweise zugeordneten Formabschnittshälften 34, 35 weiter aufeinander zugeführt, bis ihre Seiten 38, 39 jeweils dicht aneinanderliegen. Von hier ab werden sie dann geradlinig zwischen sich an die Parallel-Zuführungsleisten 49 anschließenden Führungsleisten 52 weiter geführt.

In den Formabschnittshälften 34, 35 sind jeweils in zwei Ebenen Vakuum-Bohrungen 53 ausgebildet, die sich jeweils bis zur auf dem Maschinentisch 37 aufliegenden Unterseite 55 jeder Formabschnittshälfte 34, 35 erstrecken. Die jeweils den einander zugeordneten Seiten 38, 39 näherliegenden Vakuum-Bohrungen sind über Öffnungen 56 in Form langgestreckter Schlitze mit dem mittleren Bereich der Formausnehmung 57 verbunden, in dem die beiden Tropfabschnitte 3 und die diesen benachbarten Übergangsabschnitte 7 zu den Schlauchabschnitten 2 ausgeformt werden.

In dem Maschinentisch 37 sind nach oben offene Vakuum-Kanäle 58 ausgebildet, mit denen die erwähnten Vakuum-Bohrungen 53 in Überdeckung kommen, wenn die Formhälften 34, 35 beim Zusammenführen über die Parallel-Zuführungsleisten 49 in eine Stellung kommen, in der sie noch Abstand voneinander haben. In diesem Augenblick werden die Vakuum-Bohrungen 53 und damit auch die entsprechenden Öffnungen 56 mit Vakuum beaufschlagt, was zur Folge hat, daß der Schlauch 45' in diesem mittleren Bereich sich bereits gegen die Seiten 38 bzw. 39 der Formabschnittshälften 34, 35 im Bereich der Formausnehmung 57 legt. Hierdurch erfolgt bereits eine Vorformung des Schlauches in seinem mittleren Bereich. Die Vakuum-Kanäle 58 sind ständig durch die Formhälften 34, 35 abgedeckt, so daß hier keine Fehlluft eindringen kann. Die Vakuum-Erzeugung erfolgt in üblicher Weise. Die Seitenwände 4 und 5 des Schlauchs können deshalb nicht zusammenkleben.

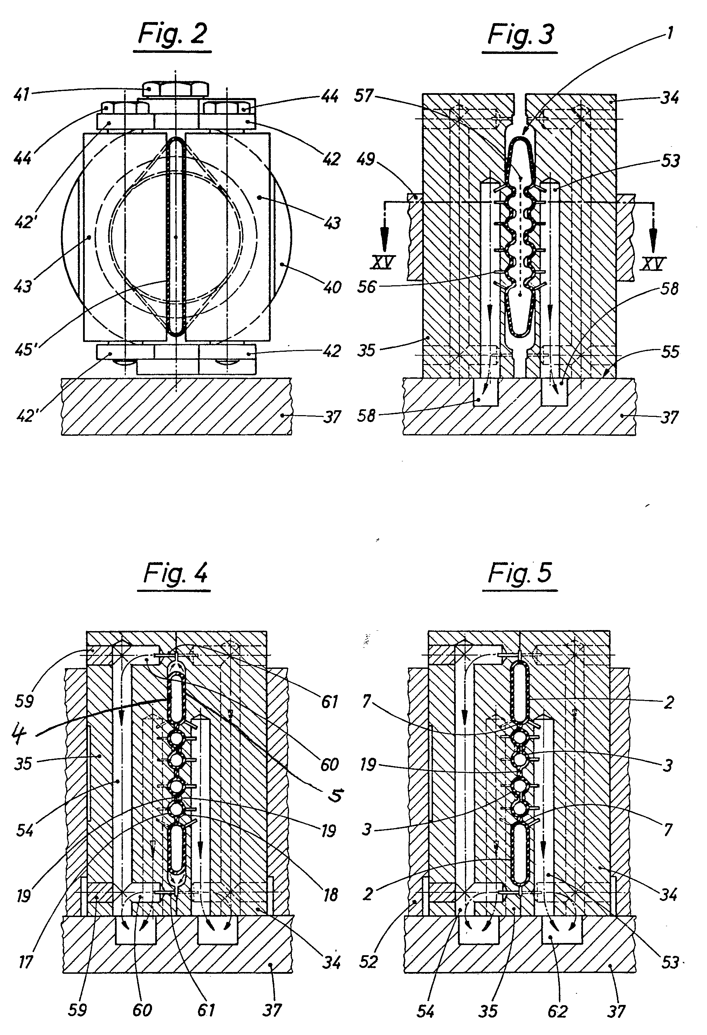

Die außenliegenden Vakuum-Bohrungen 54 sind über entsprechende, an ihren Außenseiten durch Stopfen 59 verschlossene Querbohrungen 60 und sich an diese wiederum anschließende Öffnungen 61 in Form langgestreckter Schlitze mit dem oberen bzw. unteren Bereich der Formausnehmung 57 verbunden, in der der jeweilige Schlauchabschnitt 2 ausgeformt wird. Die zugeordneten Vakuum-Bohrungen 54 werden in dem Augenblick mit Vakuum beaufschlagt, wenn die beiden einander zugeordneten Formabschnittshälften 34, 35 mit ihren zugeordneten Seiten 38, 39 dicht gegeneinandergedrückt werden, wie es in Fig. 4 dargestellt ist. Die Vakuum-Beaufschlagung erfolgt dadurch, daß in diesem zugeordneten Bereich der Formstrecke 36 die nur der Vorformung dienenden Vakuum-Kanäle 58 im Maschinentisch 37 sich zu der Endformung dienenden Vakuum-Kanälen 62 verbreitern. Durch diese Vakuum-Beaufschlagung wird die endgültige Formgebung der Schlauchabschnitte 2 aus der Lage in Fig. 4 in die Lage in Fig. 5 bewirkt, wobei der guten Ordnung halber darauf hingewiesen sei, daß in der Praxis die tatsächliche Verformung der Schlauchabschnitte 2 nach oben bzw. unten geringer ist als es aus Fig. 4 hervorgeht. Tatsächlich ist die Verformung nach oben oder unten nur etwa 1 bis 2 mm. In der in Fig. 4 dargestellten Stellung, in der sich die beiden Formabschnittshälften 34, 35 dicht gegeneinanderlegen, werden die Begrenzungswände 17, 18 im Bereich der Tropfabschnitte 3 an den Schweißstellen 19 und 20 miteinander verschweißt.

Die Zusammenführung der Formabschnittshälften 34, 35 in einer zueinander völlig parallelen Führung kann außer mit der Vorrichtung nach der DE-AS 2 061 027 auch mit einer Vorrichtung nach der deutschen Patentanmeldung P 2 832 350.4 erfolgen.

## Patentansprüche

1. Verfahren zur Herstellung eines Flasch-Hohlkörpers mit inneren Zwischenwänden unter Verwendung einer auf einer Formstrecke bewegten, aus endlos geführten Formabschnittshälften bestehenden Form, die beim Einlauf in die lineare Formstrecke jeweils paarweise unter Schließen der Form aufeinander zu und in Bewegungsrichtung dicht aneinander anliegend geführt werden, und wobei der Form ein noch warmplastischer Schlauch zugeführt und unter Vakuum in der Form verformt wird, dadurch gekennzeichnet, daß der Schlauch bereits vor dem Zusammenführen zweier Formabschnittshälften zumindest in einem Teilbereich seines Querschnitts mit Vakuum beaufschlagt wird, indem mindestens ein Vakuumkanal sich bis vor die lineare Formstrecke in den Einlaufbereich der Formabschnittshälften erstreckt, so daß die mindestens eine Vakuum-Bohrung vor Schließen der Form mit dem Vakuumkanal in Überdeckung kommt und im Anschluß daran über einen Teil seines Querschnitts unter Freilassung von Hohlräumen unter Bildung von Schweißstellen zusammengedrückt wird.

2. Verfahren nach Patentanspruch 1, dadurch gekennzeichnet, daß der Querschnittsbereich des noch warmplastischen Schlauches, aus dem der Schlauchabschnitt ausgeformt wird, erst nach vollständigem Schließen der Form von außen mit Vakuum beaufschlagt wird.

3. Verfahren nach Patentanspruch 1, dadurch gekennzeichnet, daß die Vakuumbeaufschlagung 0,03 bis 0,10 Sekunden vor dem Schließen der Form einsetzt.

4. Verfahren nach Patentanspruch 2, dadurch gekennzeichnet, daß die Vakuumbeaufschlagung des Querschnittsbereiches, aus dem der Schlauchabschnitt geformt wird, 0,03 bis 0,10 Sekunden nach Schließen der Form einsetzt.

5. Verfahren nach einem der Patentansprüche 1 bis 4, dadurch gekennzeichnet, daß Stützluft geringen Druckes in den noch warmplastischen Schlauch eingeblasen wird.

6. Verfahren nach Patentanspruch 5, dadurch gekennzeichnet, daß Stützluft mit einem Druck von 0,01 bis 0,05 bar eingeblasen wird.

7. Verfahren nach einem der Patentansprüche 1 bis 6, dadurch gekennzeichnet, daß der noch warmplastische Schlauch vor der Vakuumbeaufschlagung flachgedrückt wird.

8. Vorrichtung zur Ausübung des Verfahrens nach einem der Patentansprüche 1 bis 7, mit einer auf einer Formstrecke (36) bewegbaren, aus endlos geführten Formabschnittshälften (34, 35) bestehenden Form, die beim Einlauf in die Formstrecke (36) jeweils paarweise aufeinander zu und in Bewegungsrichtung dicht aneinander anliegend führbar sind, wobei die jeweils zwei einander zugeordneten Formabschnittshälften (34, 35) eine entsprechend dem zu erzeugenden Profil geformte Formausnehmung aufweisen, und wobei die Formabschnittshälften (34, 35) mit jeweils mindestens einer zu ihrer Unterseite einerseits und zu der Formausnehmung andererseits führenden Vakuum-Bohrung (53) versehen sind, die mit mindestens einem Vakuum-Kanal (58) in einem die Form auf der Formstrecke (36) tragenden Maschinentisch in Überdeckung bringbar ist, dadurch gekennzeichnet, daß der mindestens eine Vakuum-Kanal (58) sich bis vor die lineare Formstrecke (36) in den Einlaufbereich der Formabschnittshälften (34, 35) erstreckt, so daß die mindestens eine Vakuum-Bohrung (53) vor Schließen der Form mit diesem Vakuum-Kanal (58) in Überdeckung kommt.

9. Vorrichtung nach Patentanspruch 8, dadurch gekennzeichnet, daß in jeder Formabschnittshälfte (34, 35) jeweils mindestens zwei Gruppen von voneinander unabhängigen Vakuum-Bohrungen (53, 54) vorgesehen sind, die mit unterschiedlichen Bereichen der Formausnehmung (57) verbunden sind, und daß diesen Gruppen von Vakuum-Bohrungen (53, 54) verschiedene Vakuum-Kanäle (58, 62) zugeordnet sind.

10. Vorrichtung nach Patentanspruch 9, dadurch gekennzeichnet, daß die zuerst mit dem Vakuum-Kanal (58) in Überdeckung kommenden Vakuum-Bohrungen (53) der Formausnehmung (57) näher liegen als die anderen Vakuum-Bohrungen (54), und daß der den letztgenannten Vakuum-Bohrungen (54) zugeordnete Vakuum-Kanal (62) durch eine Verbreiterung des anderen Vakuum-Kanals (58) gebildet ist.

## Claims

1. Method of manufacturing a water hose having inner intermediate walls using a mould which is moved along a mould run and consists of endlessly guided mould halves which, when moving into the linear mould run, are guided in pairs towards one another and closely adjacent to one another in the direction of movement while the mould is closed, and a still thermoplastic hose being fed to the mould and deformed therein under a vacuum, characterised in that, even before two mould halves are moved together, the hose is subjected to a vacuum at least in part of its cross-section, at least one vacuum channel extending into the run-in area of the mould halves as far as the front of the linear mould run so that at least one vacuum hole overlaps the vacuum channel before the mould is closed, and, subsequently, is compressed over part of its cross-section leaving hollow spaces open to form weld marks.

2. Method as claimed in Claim 1, characterised in that the still thermoplastic hose is subjected to a vacuum essentially in the cross-sectional area of the drip section to be moulded while the said section is deformed.

3. Method according to Claim 1 or 2, characterised in that the cross-sectional area of the still thermoplastic hose from which the hose section is moulded is not subjected to a vacuum from outside until the mould has been fully closed.

4. Method according to Claim 1 or 2, characterised in that the application of a vacuum commences 0.03 to 0.10 seconds before the mould is closed.

5. Method according to Claim 3, characterised in that the application of a vacuum to the cross-sectional area from which the hose section is moulded commences 0.03 to 0.10 seconds after the mould is closed.

6. Method according to any one of Claims 1 to 5, characterised in that supporting air is injected under low pressure into the still thermoplastic hose.

7. Method according to Claim 6, characterised in that supporting air is injected under a pressure of 0.01 to 0.05 bar.

8. Method according to any one of Claims 1 to 7, characterised in that the still thermoplastic hose is pressed flat before the vacuum is applied.

9. Apparatus for carrying out the method according to any one of Claims 1 to 8, comprising a mould which can be moved along a mould run (36) and consists of endlessly guided mould halves (34, 35) which, when moving into the linear mould run, can b guided in pairs towards one another and closely adjacent to one another in the direction of movement, the mould halves (34, 35) which are associated with one another in pairs having a mould recess which is shaped to correspond to the profile to be produced, and the mould halves (34, 35) each being provided with at least one vacuum hole (53) which leads, on the one hand, to their undersides and, on the other hand, to the mould recess and which can be moved to overlap with at least one vacuum channel (58) in a table supporting the mould on the mould run (36), characterised in that at least one vacuum channel (58) extends into the run-in area of the mould halves (34, 35) as far as the front of the linear mould run (36) so that at least one vacuum hole (53) overlaps this vacuum channel (58) before the mould is closed.

10. Apparatus according to Claim 9, characterised in that there are provided in each mould half (34, 35) at least two groups of vacuum holes (53, 54) which are independent from one another and which are connected to different areas of the mould recess (57), and that these groups of vacuum holes (53, 54) are associated with different vacuum channels (58, 62).

11. Apparatus according to Claim 10, characterised in that the vacuum holes (53) which first overlap the vacuum channel (58) are closer to the mould recess (57) than the other vacuum holes (54), and that the vacuum channel (62) which is associated with the last-mentioned vacuum holes (54) is formed by a broadening of the other vacuum channel (58).

**Revendications**

1. Procédé pour la fabrication d'un tuyau souple d'arrosage avec des cloisons intérieures de séparation en utilisant un moule déplacé sur un trajet de moulage, constitué par des moitiés d'éléments de moule guidées sans fin qui, lors de l'entrée dans le trajet de moulage linéaire, sont amenées respectivement par paires l'une sur l'autre en fermant le moule et sont guidées en reposant étroitement l'une sur l'autre dans la direction du mouvement, un tuyau souple encore à l'état plastique à chaud étant amené au moule et façonné sous vide dans le moule, caractérisé en ce que le tuyau souple est mis sous vide au moins dans une zone partielle de sa section transversale avant même le rapprochement de deux moitiés d'éléments de moule, en ce qu'au moins un conduit de vide s'étend jusque devant le trajet de moulage linéaire dans le domaine d'entrée des moitiés d'éléments de moule, de sorte que, au moins l'un des perçages de vide vienne en recouvrement avec le conduit de vide avant la fermeture du moule, le tuyau étant à la suite de cela comprimé sur une partie de sa section transversale en laissant demeurer libres des cavités et en formant des zones de soudure.

2. Procédé selon la revendication 1, caractérisé en ce que le tuyau souple encore à l'état plastique à chaud est mis sous vide essentiellement dans le domaine de section transversale de la section d'écoulement goutte à goutte à mouler, pendant le façonnage de cette section.

3. Procédé selon la revendication 1 ou 2, caractérisé en ce que la zone de section transversale du tuyau souple encore à l'état plastique à chaud, à partir duquel la section de conduite est moulée, n'est mise sous vide de l'extérieur qu'après fermeture complète du moule.

4. Procédé selon la revendication 1 ou 2, caractérisé en ce que la mise sous vide est établie 0,03 à 0,10 seconde avant la fermeture du moule.

5. Procédé selon la revendication 3, caractérisé en ce que la mise sous vide de la partie de section transversale à partir de laquelle la section de conduite est moulée, est établie de 0,03 à 0,10 seconde après la fermeture du moule.

6. Procédé selon l'une des revendications 1 à 5, caractérisé en ce que de l'air d'appui à faible pression est insufflé dans le tuyau souple encore à l'état plastique à chaud.

7. Procédé selon la revendication 6, caractérisé en ce que l'air d'appui est insufflé sous une pression de 0,01 à 0,05 bar.

8. Procédé selon l'une des revendications 1 à 7, caractérisé en ce que le tuyau souple encore à l'état plastique à chaud est aplati par compression avant la mise sous vide.

9. Dispositif pour la mise en oeuvre du procédé selon l'une des revendications 1 à 8, avec un moule déplaçable sur un trajet de moulage (36), constitué par des moitiés d'éléments de moule (34, 35) guidées sans fin, qui, lors de l'entrée dans le trajet de moulage (36) peuvent être amenées respectivement par paires l'une sur l'autre et être guidées en reposant étroitement l'une sur l'autre dans la direction de mouvement, les deux moitiés d'éléments de moule (34, 35), à chaque fois associées, présentant une cavité de moulé formée pour correspondre au profil à réaliser, les moitiés d'éléments de moule (34, 35) étant chacune munies d'au moins un perçage de vide (53) conduisant d'une part vers leur face inférieure et d'autre part vers la cavité de moule, perçage qui peut être amené en recouvrement avec au moins un conduit de vide (58) dans une table de machine portant le moule sur le trajet de moulage (36), caractérisé en ce que le conduit de vide prévu au minimum (58) s'étend jusque devant le trajet de moulage linéaire (36) dans le domaine d'entrée des moitiés d'éléments de moule (34, 35) de sorte que le perçage de vide prévu au minimum (53) vienne en recouvrement avec ce conduit de vide (58) avant la fermeture du moule.

10. Dispositif selon la revendication 9, caractérisé en ce que, dans chaque moitié d'élément de moule (34, 35) sont à chaque fois prévus au moins deux groupes de perçages de vide (53, 54) indépendants entre eux, qui sont reliés à des zones différentes de la cavité de moule (57), et en ce que des conduits de vide différents (58, 62) sont associés à ces groupes de perçages de vide (53, 54).

11. Dispositif selon la revendication 10, caractérisé en ce que les perçages de vide (53) venant les premiers en recouvrement avec le conduit de vide (58) sont situés plus près de la cavité de moule (57) que les autres perçages de vide (54), et en ce que le conduit de vide (62) associé aux perçages de vide (54) mentionnés en dernier lieu, est formé par un élargissement de l'autre conduit de vide (58).

*Fig. 1*

Fig. 2

Fig. 3

Fig. 4

Fig. 5